# EUROPÄISCHE PATENTSCHRIFT

(11) **EP 3 447 351 B1**
(45) Veröffentlichungstag und Bekanntmachung des Hinweises auf die Patenterteilung: **23.09.2020**
(21) Anmeldenummer: 18190172.9
(22) Anmeldetag: 22.08.2018
(51) Int. Cl.: F16K 41/02, F16J 15/18, H05F 3/02, F16K 31/126

(54) **STELLVENTIL**
CONTROL VALVE
VANNE DE RÉGULATION

(30) Priorität: 22.08.2017 DE 202017105035 U
(43) Veröffentlichungstag der Anmeldung: 27.02.2019
(73) Patentinhaber: Samson AG, 60314 Frankfurt (DE)
(72) Erfinder: KIRBS, Uwe, 60388 Frankfurt (DE); VNUCEC, Domagoj, 68549 llvesheim (DE)
(74) Vertreter: Puschmann Borchert Kaiser Klettner Patentanwälte Partnerschaft mbB

(56) Entgegenhaltungen:
- DE-A1- 3 722 816
- DE-A1-102015 016 357
- DE-B3-102006 033 209
- DE-C2- 19 528 127
- GB-A- 186 526
- JP-A- H01 169 188
- JP-U- H02 122 277
- JP-Y2- S5 911 230
- US-A1- 2010 050 786

## Beschreibung

Die Erfindung betrifft ein Stellventil zum Einstellen einer Prozessfluidströmung einer prozesstechnischen Anlage umfassend ein Ventilgehäuse mit einem Ventilsitz, eine an dem Ventilgehäuse gelagerte Hubstange, die ein Ventilglied trägt, das mit dem Ventilsitz zum Öffnen und Schließen des Stellventils zusammenwirkt.

Statische Aufladungen im oder am Ventil können zur Funkenbildung und somit zu einem kritischen Zustand führen. Daher muss sichergestellt sein, dass das Ventilglied in jeder Stellung sicher mit der Rohrleitung geerdet ist, obwohl bei einem geöffneten Ventil kein direkter Kontakt über einen metallischen Ventilsitz zum Gehäuse besteht.

Die EP 0 096 366 A2 betrifft eine elektrostatische Ableitungsvorrichtung für Hähne mit einer sphärischen Oberfläche mit einem Kontaktelement zwischen einem Kugelventil und einer Spindel und einem zweiten Kontaktelement zwischen der Spindel und einer Stopfbuchse oder einer Mutter, wobei zumindest das Kontaktelement zwischen der Kugel und der Spindel aus zwei in einer Buchse geführten Metallstiften besteht, die mit der Kugel und mit der Spindel mittels einer zwischen den beiden Metallstiften angeordneten Feder in Kontakt stehen, sodass die Feder nicht aggressiven Flüssigkeiten ausgesetzt ist. Diese Anordnung zur Ableitung elektrostatischer Energie ist nicht für die oben erwähnten Stellventile geeignet, bauaufwendig und einem gewissen Abrieb unterworfen.

Die JP000H01169188A, DE 10 2015 016 357 A und US 2010 / 050 786 A1 betreffen ein Ventil zur Steuerung eines Prozessfluids mittels einer axialen Bewegung einer Stellstange.

Einen solchen Abrieb würde auch ein elektrischer Kontaktschalter, wie beispielsweise anhand der DE 10 2006 033 209 B3 beschrieben, produzieren. In den dort gezeigten Ausgestaltungen sind Ringfedern in Nuten eingesetzt, die ein konturfreies Gegenstück kontaktieren. Die Federspannung ist dabei in Richtung der Nut gerichtet, so dass die Feder in die Nut gedrückt wird, was für einen sicheren Halt in der Nut sorgt. Durch die Anpresskräfte wird eine großflächige Kontaktierung gewährleistet, so dass eine hohe Leistung sicher übertragen werden kann.

Eine Kontaktierungsvorrichtung im Hochspannungsbereich ist auch aus der DE 195 28 127 C2 bekannt. Eine weitere elektrische Schalteinrichtung ist aus der GB 186,526 A bekannt.

Die JP H02122277 U offenbart ein Drehventil. Die DE 3722816 A1 offenbart eine Nachspannvorrichtung für eine Stopfbuchspackung.

Die JP S59 11 230 Y2 offenbart eine Ringfeder, die die Ventilstange in einer Kontaktierungshalterung umgreift, wobei diese der Herstellung eines Kurzschlusses zwischen einer Erdungsfassung und der Ventilstange eines Drehventils dient.

Der Erfindung liegt die Aufgabe zugrunde, ein Ventil der eingangs genannten Art bereit zu stellen, bei dem eine reibungsarme Kontaktierung einer axial beweglichen Hubstange ermöglicht wird.

Die Aufgabe wird durch ein Stellventil mit den Merkmalen des Hauptanspruchs gelöst. Vorteilhafte Ausgestaltungen der Erfindung sind in den Unteransprüchen gekennzeichnet.

Das erfindungsgemäße Ventil ist dadurch gekennzeichnet, dass zur elektrischen Kontaktierung der Hubstange eine ortsfeste, gegenüber der Hubstange gelagerte Kontaktierungshalterung vorgesehen ist. Die Hubstange führt im Betrieb eine axiale Relativbewegung zur Kontaktierungshalterung, die mit dem Ventilgehäuse ortsfest verbunden ist aus. Die Kontaktierungshalterung hält in Axialrichtung beidseitig elektrisch leitend eine in der Kontaktierungshalterung axial beweglich gelagerte, elektrisch leitende Ringfeder, wobei die Ringfeder die Hubstange umgreift. Die Ringfeder dient zur Verbesserung der elektrischen Kontaktierung zwischen der Hubstange des Stellgliedes und dem Ventilgehäuse. Die Ringfeder kann sich dabei sowohl relativ zur Hubstange als auch innerhalb einer axialen Begrenzung der Kontaktierungshalterung wenigstens so weit in Axialrichtung relativ bewegen, dass ein Abrollen der Ringfeder in der Kontaktierungshalterung entlang der Hubstange ermöglicht ist. Erfindungsgemäß ist besonders vorteilhaft, dass die Ringfeder an der Hubstange abrollt und daher reibungsarm ist und dass nahezu kein Verschleiß entsteht. Dazu ist die Ringfeder in ihrer Vorspannung so gewählt, dass sie an die insbesondere konturfreie Hubstange angedrückt wird, wobei die Reibung mit der Hubstange die Ringfeder in eine Rollbewegung versetzt, wenn diese von der Kontaktierungseinrichtung in ihrer Axialbewegung begrenzt wird und die Hubstange über diesen Bereich hinausfährt.

Die Erfindung zeichnet sich auch dadurch aus, dass die Kontaktierungshalterung eine obere Anlagefläche aufweist, die durch ein ringförmiges Federelement gebildet ist, und dass die obere Anlagefläche in Richtung der Ringfeder vorgespannt ist. So ist sichergestellt, dass die Ringfeder mit der Hubstange bzw. über den Klemmring mit dem Ventilgehäuse permanent in Kontakt steht und dennoch unter Wegdrücken des Federelements ein Abrollen der Ringfeder ermöglicht ist.

Eine vorteilhafte Ausführungsform der Erfindung ist dadurch gekennzeichnet, dass die Kontaktierungshalterung eine Anlagefläche eines Abstützungsteils unterhalb der Ringfeder umfasst. Durch die obere Anlagefläche und/oder die untere Anlagefläche ist die Ringfeder axial beidseitig begrenzt. So liegt die Ringfeder abhängig von der Bewegungsrichtung der Ventilstange an der oberen Anlagefläche oder der unteren Anlagefläche an. Die Ringfeder kann so einerseits elektrischen Kontakt zur Hubstange und andererseits Kontakt zu dem Gehäuse haben. So kann auf einfache Weise eine galvanische Verbindung von Ventilgehäuse zu Hubstange geschaffen werden, was eine elektrostatische Aufladung zwischen den Teilen verhindert. Insbesondere ist der Abstand zwischen der Anlagefläche oberhalb der Ringfeder und der Oberfläche des Abstützteils unterhalb der Ringfeder größer als der Querschnitt der Ringfeder, sodass die Ringfeder sich geringfügig frei in der Kontaktierungshalterung und mit der Hubstange mitbewegen kann. So kann auf einfache Weise eine zuverlässige und reibungsarme galvanische Verbindung von Ventilgehäuse zu Hubstange geschaffen werden.

Ein Beispiel, das nicht Teil der Erfindung ist, ist dadurch gekennzeichnet, dass die obere Anlagefläche in Form einer Ringnut eines Klemmrings ausgebildet ist. Dieser kann in das Ventilgehäuse eingeschraubt werden. Dies hat den Vorteil, dass die Ringnut für die Ringfeder in dem Klemmring, der ohnehin zur Befestigung einer Stopfbuchspackung im Ventilgehäuse dient, ohne weiteres angebracht werden kann, was die Herstellung vereinfacht.

Eine weitere vorteilhafte Ausführungsform der Erfindung ist dadurch gekennzeichnet, dass der untere Abstützungsteil zwischen der Ringfeder und einer Stopfbuchspackung angeordnet ist, die zwischen der Hubstange und dem Ventilgehäuse angeordnet ist. Da die Stopfbuchspackung ohnehin in einer Sack-Bohrung in dem Ventilgehäuse angeordnet ist, kann der Abstützungsteil ohne weiteren Bauaufwand untergebracht werden.

Eine weitere vorteilhafte Ausführungsform der Erfindung ist dadurch gekennzeichnet, dass der Abstützungsteil durch ein ringförmiges, elektrisch leitendes Element gebildet ist, das in elektrischem Kontakt mit dem Ventilgehäuse steht, sodass ein Leitungspfad von der Ringfeder, über den Abstützungsteil und den Klemmring zu dem Gehäuse gebildet wird.

Eine weitere vorteilhafte Ausführungsform der Erfindung ist dadurch gekennzeichnet, dass die Ringfeder in ihrer Länge in sich verdrillt ist, sodass die Ringfeder sowohl an der oberen Anlagefläche des Ventilgehäuses als auch an dem unteren Abstützungsteil permanent abgestützt ist. Indem die Ringfeder verdrillt wird, liegen die verschiedenen Abschnitte der Ringfeder nicht in einer Ebene, sondern es ergibt sich eine Art Wellenform, sodass sich die Ringfeder mit Sicherheit sowohl an der Anlagefläche als auch an dem Abstützungsteil unabhängig von dem Betätigungszustand der Hubstange permanent abstützt.

Eine weitere vorteilhafte Ausführungsform der Erfindung ist dadurch gekennzeichnet, dass die Ringfeder in einer gegenüber einer Ebene senkrecht zu einer Längsachse des Ventilschafts schräg verlaufenden Ringnut in dem Klemmring liegt, sodass die Ringfeder sowohl an der oberen Anlagefläche des Ventilgehäuses als auch an einer Oberfläche des unteren Abstützungsteils permanent abgestützt ist. Indem die Ringnut abgeschrägt ist, wird ebenfalls in vorteilhafter Weise erreicht, dass sich die Ringfeder mit Sicherheit sowohl an der Anlagefläche als auch an dem Abstützungsteil permanent unabhängig von dem Betätigungszustand der Hubstange abstützt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
Fig. 1 eine Seitenansicht eines Stellventils nach der Erfindung;
Fig. 2 eine Detailansicht des Bereichs eines nicht erfindungsgemäßen Stellventils mit der Stopfbuchspackung zur Lagerung der Hubstange;
Fig. 3 eine erste Detailansicht des Bereichs einer Ringfeder in einem nicht erfindungsgemäßen Stellventil;
Fig. 4 eine zweite Detailansicht des Bereichs der Ringfeder in einem nicht erfindungsgemäßen Stellventil;
Fig. 5 eine dritte Detailansicht des Bereichs der Ringfeder in dem erfindungsgemäßen Stellventil;

Das in den Figuren gezeigte Stellventil 2 umfasst einen Stellantrieb 4 und ein über ein Joch 6 mit dem Stellantrieb 4 verbundenes Ventilgehäuse 8 mit einem Einlass 10 und einem Auslass 12 und einer Ventilöffnung 14, die durch ein Ventilglied 16 zu verschließen oder zu öffnen ist, der durch eine mit dem Ventilglied 16 und dem Stellantrieb 4 verbundenen Hubstange 18 betätigt wird. Die Hubstange 18 ist dazu mit einem Membran-Arbeitsorgan 20 des Stellantriebs 4 verbunden. Das Stellventil wird in an sich bekannter Weise durch einen Stellungsregler 22 vervollständigt.

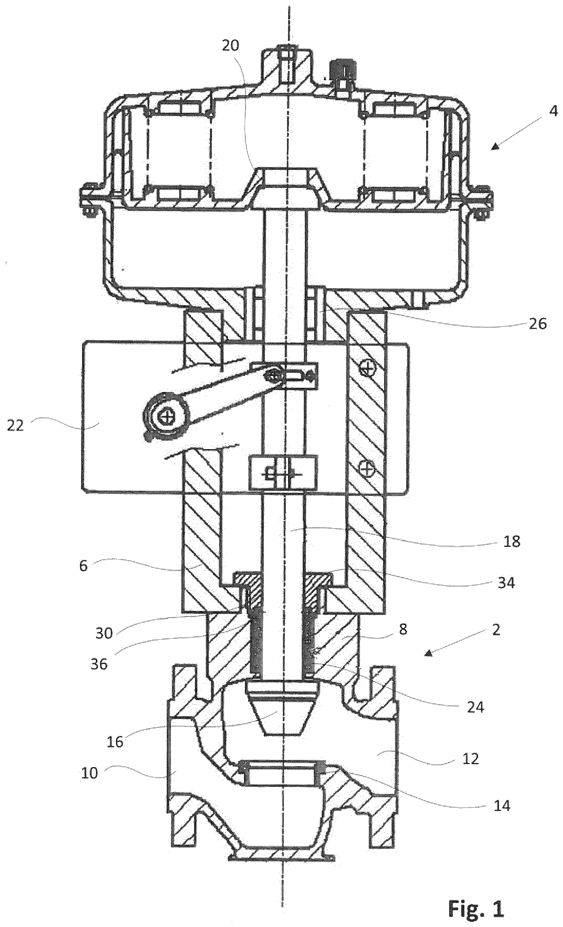

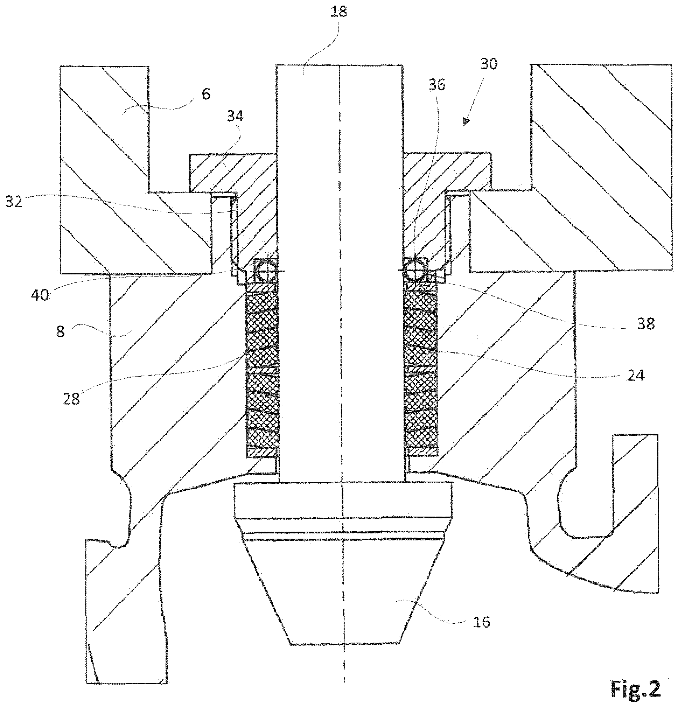

Gemäß den Figuren 1 und 2 ist die Hubstange 18 an dem Ventilgehäuse 8 durch eine Stopfbuchspackung 24 und an dem Stellantrieb 4 durch ein weiteres Lager 26 (Fig. 1) gelagert. Die Stopfbuchspackung 24 ist in einer Sack-Bohrung 28 des Ventilgehäuses 8 angeordnet und wird durch einen Klemmring 30 gehalten, der über eine Gewindeverbindung 32 in das Ventilgehäuse 8 eingeschraubt wird. Ein Flansch des Klemmrings 30, übergreift mit einem Ringansatz 34 das Joch 6.

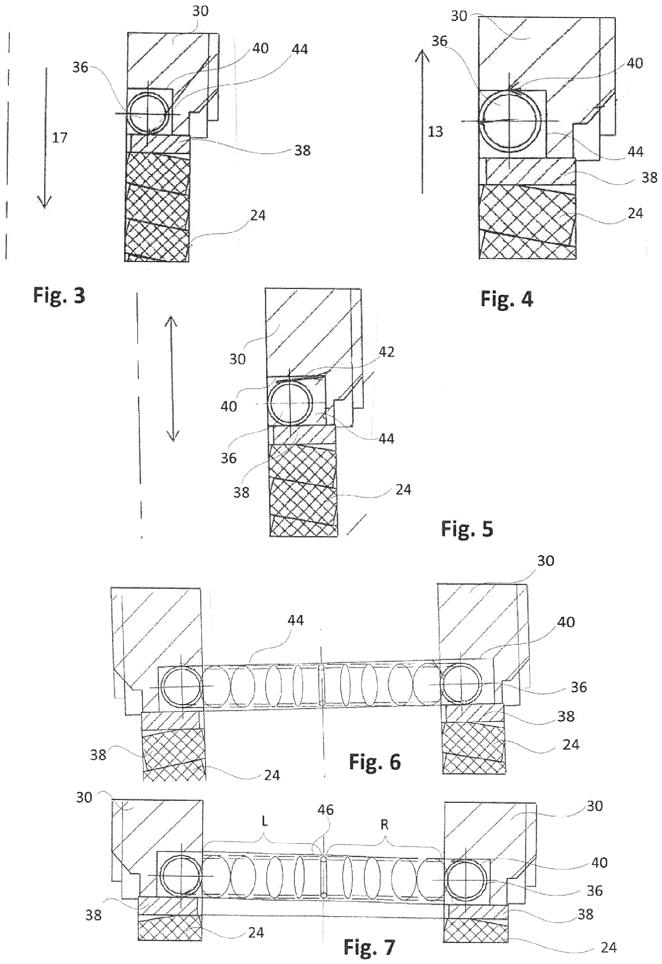

Gemäß den Figuren 1 und 2 ist zur elektrischen Kontaktierung der Hubstange 18 eine ortsfest gegenüber der Hubstange 18 gelagerte Kontaktierungshalterung vorgesehen, so dass die Hubstange 18 im Betrieb eine axiale Relativbewegung zur Kontaktierungshalterung ausführt. Die Kontaktierungseinrichtung hält in Axialrichtung beidseitig elektrisch leitend eine in der Kontaktierungshalterung axial beweglich gelagerte Ringfeder 36. Die Kontaktierungshalterung ist durch den Klemmring 30 und ein ringförmigen unteren Abstützungsteil 38 gebildet. Die Ringfeder 36 ist zwischen dem Klemmring 30 und der Stopfbuchspackung 24 angeordnet, wo sie die Hubstange 18 unter Vorspannung umgreift, so dass die Ringfeder 36 unter der Federkraft an der Hubstange 18 gehalten wird, wie dies im Detail anhand der Figuren 3 bis 5 beschrieben wird.

Fig. 3 ist eine Detailansicht des Bereichs eines nicht erfindungsgemäßen Stellventils 2 mit der Ringfeder 36, wobei dargestellt ist, dass bei einer Hubbewegung der Hubstange 18 nach unten (Pfeil A) ein Kontakt der Ringfeder 36 an der Hubstange 18 und einer Oberfläche 37 des ringförmigen unteren Abstützungsteils 38 erfolgt, der zwischen der Stopfbuchspackung 24 und der Ringfeder 36 liegt.

Die Fig. 4 zeigt eine Detailansicht des Bereichs eines nicht erfindungsgemäßen Stellventils 2 mit der Ringfeder 36, wobei dargestellt ist, dass bei einer Hubbewegung der Hubstange 18 nach oben (Pfeil B) ein Kontakt der Ringfeder 36 an der Hubstange 18 und an einer ringförmigen oberen Anlagefläche 40 des Klemmrings 30 erfolgt.

Die Fig. 5 zeigt eine dritte Detailansicht des Bereichs der Ringfeder 36 in dem erfindungsgemäßen Stellventil 2, wobei dargestellt ist, dass ein dünnes ringförmiges Federelement 42 als axiale Abstützung zwischen der Ringfeder 36 und dem Klemmring 30 angeordnet ist, sodass ein permanenter Kontakt des Klemmrings 30 zu der Ringfeder 36 und von der Ringfeder 36 zu der Hubstange 18 unabhängig von der Bewegungsrichtung der Hubstange 18 (Doppelpfeil A, B) erfolgt, und dennoch eine geringfügige axiale Beweglichkeit der Ringfeder 36 gegeben ist.

Die Fig. 6 zeigt eine erste Seitenansicht des Bereichs einer Ringfeder 36 in einem nicht erfindungsgemäßen Stellventil 2, bei dem die Ringfeder 36 in sich verdrillt ist, sodass sie eine wellige Form annimmt, wobei eine permanente Abstützung der Ringfeder 36 an einer Ringnut 44 des Klemmrings 30 und an dem Abstützungsteil 38 gewährleistet ist.

Fig. 7 zeigt eine zweite Seitenansicht des Bereichs einer Ringfeder 36 in einem nicht erfindungsgemäßen Stellventil 2, wobei die Ringfeder 36 in einer gegenüber einer Ebene senkrecht zu einer Längsachse des Ventilschafts schräg verlaufenden Ringnut 46 in dem Klemmring liegt, sodass die Ringfeder 36 sowohl an der oberen Anlagefläche 40 des Ventilgehäuses 8 als auch an einer Oberfläche 37 des unteren Abstützungsteils 38 permanent abgestützt ist.

Bei den Ausführungsbeispielen des Stellventils bestehen die Ringfeder 36, der Klemmring 30 und der Abstützungsteil 38 aus einem leitfähigen Material, um den gesamten Übergangswiderstand zwischen der Hubstange 18 und dem Ventilgehäuse gering zu halten.

Indem sich die Ringfeder 36 bei einer Hubbewegung an der Hubstange abrollt entsteht kaum eine Reibung zwischen der Hubstange und der Ringfeder, was insbesondere die Lebensdauer der Ringfeder 36 verlängert.

### Bezugszeichenliste

- 2: Stellventil
- 4: Stellantrieb
- 6: Joch
- 8: Ventilgehäuse
- 10: Einlass
- 12: Auslass
- 14: Ventilsitz
- 16: Ventilglied
- 18: Hubstange
- 20: Membran-Arbeitsorgan
- 22: Stellungsregler
- 24: Stopfbuchspackung
- 26: Lager
- 28: Sack-Bohrung
- 30: Klemmring
- 32: Gewindeverbindung
- 34: Flansch
- 36: Ringfeder
- 37: Oberfläche
- 38: Abstützungsteil
- 40: Anlagefläche
- 42: Federelement
- 44: Ringnut
- 46: Ringnut

## Patentansprüche

1. Stellventil zum Einstellen einer Prozessfluidströmung einer prozesstechnischen Anlage, umfassend ein Ventilgehäuse (8) mit einem Ventilsitz (14), eine an dem Ventilgehäuse (8) axial beweglich gelagerte Hubstange (18), die ein Ventilglied (16) trägt, das mit dem Ventilsitz (14) zum Öffnen und Schließen des Stellventils (2) zusammenwirkt, **dadurch gekennzeichnet, dass** zur elektrischen Kontaktierung der Hubstange (18) eine ortsfest gegenüber der Hubstange (18) gelagerte Kontaktierungshalterung vorgesehen ist, die in Axialrichtung beidseitig elektrisch leitend eine in der Kontaktierungshalterung axial beweglich gelagerte, elektrisch leitende Ringfeder (36) hält, wobei die Ringfeder (36) die Hubstange (18) umgreift, wobei die Kontaktierungshalterung eine obere Anlagefläche (40) aufweist, die durch ein ringförmiges Federelement (42) gebildet ist, und dass die Ringfeder (36) in Richtung auf die obere Anlagefläche (40) vorgespannt ist.

2. Stellventil nach Anspruch 1, **dadurch gekennzeichnet, dass** die Kontaktierungshalterung eine Oberfläche eines Abstützungsteils (38) unterhalb der Ringfeder (36) umfasst.

3. Stellventil nach Anspruch 2 , **dadurch gekennzeichnet, dass** der Abstützungsteil (38) durch ein ringförmiges, elektrisch leitendes Element gebildet ist, das in elektrischem Kontakt mit dem Ventilgehäuse (8) steht.

4. Stellventil nach Anspruch 2 oder 3, **dadurch gekennzeichnet, dass** der untere radiale Abstützungsteil (38) zwischen der Ringfeder (36) und einer Stopfbuchspackung (24) angeordnet ist, die zwischen der Hubstange (18) und dem Ventilgehäuse (8) angeordnet ist.

## Claims

1. Control valve for adjusting the flow of a process fluid of a process plant, comprising a valve housing (8) with a valve seat (14), a lifting rod (18) which is axially movably mounted on the valve housing (8) and carries a valve member (16) that interacts with the valve seat (14) so as to open and close the control valve (2), **characterized in that,** for the purpose of electrically contacting the lifting rod (18), a contact holder is provided which is mounted in a fixed position with respect to the lifting rod (18), which contact holder supports an electrically conductive annular spring (36) on both sides in the axial direction, which annular spring (36) is axially movably mounted in the contact holder, with the annular spring (36) engaging around the lifting rod (18), the contact holder having an upper bearing surface (40) which is constituted by an annular spring member (42), and **in that** the annular spring (36) is prestressed in the direction of the upper bearing surface (40).

2. Control valve according to claim 1, **characterized in that** the contact holder comprises a surface of a support (38) located underneath the annular spring (36).

3. Control valve according to claim 2, **characterized in that** the support (38) is constituted by an electrically conductive annular member which is in electrical contact with the valve housing (8).

4. Control valve according to one of claims 2 and 3 above, **characterized in that** the lower radial support (38) is arranged between the annular spring (36) and a stuffing box packing (24) that is located between the lifting rod (18) and the valve housing (8).

## Revendications

1. Soupape de réglage pour le réglage d'un écoulement de fluide de traitement d'une installation technique, comprenant un carter de soupape (8) avec un siège de soupape (14), une tige de levage (18), montée mobile axialement sur le carter de soupape (8), qui porte un organe de soupape (16), qui coopère avec le siège de soupape (14) pour ouvrir et fermer la soupape de réglage (2), **caractérisée en ce que,** pour la mise en contact électrique de la tige de levage (18), il est prévu un élément de retenue de mise en contact monté fixe par rapport à la tige de levage (18), qui porte des deux côtés de manière électro-conductrice dans la direction axiale un ressort annulaire (36) électro-conducteur, monté mobile axialement dans l'élément de retenue de mise en contact, le ressort annulaire (36) entourant la tige de levage (18), l'élément de retenue de mise en contact présentant une surface d'appui supérieure (40), qui est formée par un élément ressort annulaire (42), et **en ce que** le ressort annulaire (36) est précontraint en direction de la surface d'appui supérieure (40).

2. Soupape de réglage selon la revendication 1, **caractérisée en ce que** l'élément de retenue de mise en contact comprend une surface d'une partie de support (38) au-dessous du ressort annulaire (36).

3. Soupape de réglage selon la revendication 2, **caractérisée en ce que** la partie de support (38) est formée par un élément annulaire électro-conducteur, qui est en contact électrique avec le carter de soupape (8).

4. Soupape de réglage selon la revendication 2 ou 3, **caractérisée en ce que** la partie de support (38) radiale inférieure est disposée entre le ressort annulaire (36) et une garniture de presse-étoupe (24), qui est disposée entre la tige de levage (18) et le carter de soupape (8).
